# EUROPEAN PATENT APPLICATION

(11) **EP 4 525 508 A1**
(43) Date of publication of application: **19.03.2025**
(21) Application number: 23802475.6
(22) Date of filing: 09.03.2023
(51) Int. Cl.: H04W 24/10

(54) **INFORMATION PROCESSING METHOD AND APPARATUS, AND READABLE STORAGE MEDIUM**

(30) Priority: 13.05.2022 CN 202210523922
(71) Applicant: Datang Mobile Communications Equipment Co., Ltd., Beijing 100085 (CN)
(72) Inventor: ZHANG, Mingzhu, Beijing 100085 (CN); ZHANG, Xiangdong, Beijing 100085 (CN); XU, Meng, Beijing 100085 (CN); LIANG, Jing, Beijing 100085 (CN)
(74) Representative: Studio Torta S.p.A.
(86) International application number: PCT/CN2023/080530
(87) International publication number: WO 2023/216699

(57) **Abstract**

An information processing method, an information processing apparatus and readable storage medium are provided, which relate to the field of communications technology, so as to improve a success rate of information processing. The method includes: obtaining, by a terminal, first information; triggering, by the terminal, reporting of a Timing Advance (TA) report, when a reporting condition of the TA report is determined to be met according to the first information.

## Description

### CROSS-REFERENCE TO RELATED APPLICATION

The present disclosure claims a priority to the Chinese patent application No. 202210523922.5 filed in China on May 13, 2022, a disclosure of which is incorporated herein by reference in its entirety.

### TECHNICAL FIELD

The present disclosure relates to the field of communications technology, and in particular, to an information processing method, an information processing apparatus and a readable storage medium.

### BACKGROUND

In satellite communication, there are two operational modes. One is the transparent relay mode, where a satellite merely relays a signal transparently without any processing, and a terminal and a gateway station communicate with each other. That is, the satellite only performs a frequency conversion and wireless signal amplification on an uplink/downlink signal, functioning similarly to a radio frequency repeater. The other mode is the regenerative communication mode, where the satellite can detect information of a received signal and process and forward it, to complete a function of a base station to connect the terminal and the gateway. That is, the satellite can execute functions such as the frequency conversion, signal amplification, encoding/modulation, demodulation/decoding on the uplink/downlink signal. In other words, the satellite can have all or part of the functions of a Node B (gNB) of a New Radio (NR) system, and can regenerate the signal.

Due to large delay in a satellite network, a Timing Advance (TA) mechanism in related art does not meet a need of a satellite system with the large delay. Therefore, the large delay of the satellite needs to be compensated when transmitting preamble. After receiving the preamble, the network adjusts the TA compensated by a User Equipment (UE) through a TA command in a Random Access Response (RAR). However, at this time, the network does not know how much TA the UE has compensated. Thus, the UE need to report a compensated TA to ensure consensus of the compensated TA on a network side and a UE side, and the network side can perform uplink and downlink timing scheduling based on the TA reported by the UE. However, in a Non-Terrestrial Network (NTN) scenario, there is no restriction on the TA reporting, which may result in a lower success rate of information processing.

### SUMMARY

The embodiments of the present disclosure provides an information processing method, an information processing apparatus, and a readable storage medium, so as to improve a success rate of information processing.

In a first aspect, the present disclosure provides in some embodiments an information processing method, including:
obtaining, by a terminal, first information;
triggering, by the terminal, reporting of a Timing Advance (TA) report, when a reporting condition of the TA report is determined to be met according to the first information.

Optionally, the first information includes one or more of the followings:
a Reference Signal Received Power (RSRP) referenced by a current downlink path loss;
whether Coverage Enhancement (CE) is applied in a random access process;
a current distance or a current round-trip time or a current TA between the terminal and a reference point;
information of currently available uplink resource;
whether first indication information of a network device is received.

Optionally, the triggering, by the terminal, the reporting of the TA report, when the reporting condition of the TA report is determined to be met according to the first information, including:
receiving, by the terminal, second information of a network device;
triggering, by the terminal, the reporting of the TA report, when the reporting condition is determined to be met according to the first information and/or the second information.

Optionally, the second information includes one or more of the followings:
a first threshold corresponding to an RSRP referenced by a current downlink path loss;
a second threshold corresponding to the RSRP referenced by the current downlink path loss in the case that CE is not applied in a random access process;
a third threshold corresponding to a current distance or a current round-trip time or a current TA between the terminal and a reference point;
first indication information, wherein the first indication information is used to indicate that the TA report can be reported in the case that the CE is not applied in the random access process.

Optionally, the reporting condition includes one or more of the followings:
an RSRP referenced by a current downlink path loss is greater than a first threshold;
CE is not applied in a random access process;
the CE is not applied in the random access process, and the RSRP referenced by the current downlink path loss is greater than a second threshold;
a current distance or a current round-trip time or a current TA between the terminal and a reference point is less than or equal to a third threshold;
the CE is not applied in the random access process, and the current distance or the current round-trip time or the current TA between the terminal and the reference point is greater than the third threshold;
currently available uplink resource is not uplink resource allocated for a target random access response message, wherein the target random access response message is a random access response message of the random access process that applies the CE;
receiving first indication information of a network device, wherein the first indication information is used to indicate that the TA report can be reported in the case that the CE is not applied in the random access process.

Optionally, the reference point includes any one of the followings:
any point within a cell, any point at a cell edge, or a satellite.

Optionally, the triggering, by the terminal, the reporting of the TA report, including:
when CE is not applied, triggering, by the terminal, the reporting of the TA report during configuration or reconfiguration of a TA.

Optionally, the method further includes:
reporting, by the terminal, the TA report through a Message 3 (MSG3) of a random access process.

Optionally, the method further includes:
not triggering, by the terminal, the reporting of the TA report, when the reporting condition is determined to be not met according to the first information.

In a second aspect, the present disclosure provides in some embodiments an information processing method, the method including:
determining, by a network device, second information;
sending, by the network device, the second information to a terminal, to enable the terminal to trigger reporting of a Timing Advance (TA) report when the terminal determines that a reporting condition of the TA report is met.

Optionally, the second information includes one or more of the followings:
a first threshold corresponding to a Reference Signal Received Power (RSRP) referenced by a current downlink path loss;
a second threshold corresponding to the RSRP referenced by the current downlink path loss in the case that Coverage Enhancement (CE) is not applied in a random access process;
a third threshold corresponding to a current distance or a current round-trip time or a current TA between the terminal and a reference point;
first indication information, wherein the first indication information is used to indicate that the TA report can be reported in the case that the CE is not applied in the random access process.

Optionally, the second information is carried in system information or dedicated signaling.

In a third aspect, the present disclosure provides in some embodiments an information processing apparatus applied to a terminal, including: a memory, a transceiver, and a processor:
wherein the memory is configured to store a computer program; the transceiver is configured to receive and send data under the control of the processor; the processor is configured to read the computer program in the memory and perform the following operations:
obtaining first information;
triggering reporting of a Timing Advance (TA) report, when a reporting condition of the TA report is determined to be met according to the first information.

Optionally, the first information includes one or more of the followings:
a Reference Signal Received Power (RSRP) referenced by a current downlink path loss;
whether Coverage Enhancement (CE) is applied in a random access process;
a current distance or a current round-trip time or a current TA between the terminal and a reference point;
information of currently available uplink resource;
whether first indication information of a network device is received.

Optionally, the processor is further configured to read the computer program in the memory and perform the following operations:
receiving second information of a network device;
triggering the reporting of the TA report, when the reporting condition is determined to be met according to the first information and/or the second information.

Optionally, the second information includes one or more of the followings:
a first threshold corresponding to an RSRP referenced by a current downlink path loss;
a second threshold corresponding to the RSRP referenced by the current downlink path loss in the case that CE is not applied in a random access process;
a third threshold corresponding to a current distance or a current round-trip time or a current TA between the terminal and a reference point;
first indication information, wherein the first indication information is used to indicate that the TA report can be reported in the case that the CE is not applied in the random access process.

Optionally, the reporting condition include one or more of the followings:
an RSRP referenced by a current downlink path loss is greater than a first threshold;
CE is not applied in a random access process;
the CE is not applied in the random access process, and the RSRP referenced by the current downlink path loss is greater than a second threshold;
a current distance or a current round-trip time or a current TA between the terminal and a reference point is less than or equal to a third threshold;
the CE is not applied in the random access process, and the current distance or the current round-trip time or the current TA between the terminal and the reference point is greater than the third threshold;
currently available uplink resource is not uplink resource allocated for a target random access response message, wherein the target random access response message is a random access response message of the random access process that applies the CE;
receiving first indication information of a network device, wherein the first indication information is used to indicate that the TA report can be reported in the case that the CE is not applied in the random access process.

Optionally, the processor is further configured to read the computer program in the memory and perform the following operations:
when CE is not applied, triggering the reporting of the TA report during configuration or reconfiguration of a TA.

Optionally, the processor is further configured to read the computer program in the memory and perform the following operations:
reporting the TA report through a Message 3 (MSG3) of a random access process.

Optionally, the processor is further configured to read the computer program in the memory and perform the following operations:
not triggering the reporting of the TA report, when the reporting condition is determined to be not met according to the first information.

In a fourth aspect, the present disclosure provides in some embodiments an information processing apparatus applied to a network device, including: a memory, a transceiver, and a processor:
wherein the memory is configured to store a computer program; the transceiver is configured to receive and send data under the control of the processor; the processor is configured to read the computer program in the memory and perform the following operations:
determining second information;
sending the second information to a terminal, to enable the terminal to trigger reporting of a Timing Advance (TA) report when the terminal determines that a reporting condition of the TA report is met.

Optionally, the second information includes one or more of the followings:
a first threshold corresponding to a Reference Signal Received Power (RSRP) referenced by a current downlink path loss;
a second threshold corresponding to the RSRP referenced by the current downlink path loss in the case that Coverage Enhancement (CE) is not applied in a random access process;
a third threshold corresponding to a current distance or a current round-trip time or a current TA between the terminal and a reference point;
first indication information, wherein the first indication information is used to indicate that the TA report can be reported in the case that the CE is not applied in the random access process.

In a fifth aspect, the present disclosure provides in some embodiments an information processing apparatus applied to a terminal, including:
a first acquisition unit, configured to acquire first information;
a first processing unit, configured to trigger reporting of a Timing Advance (TA) report, when a reporting condition of the TA report is determined to be met according to the first information.

In a sixth aspect, the present disclosure provides in some embodiments an information processing apparatus applied to a network device, including:
a first determination unit, configured to determine second information;
a first sending unit, configured to send the second information to a terminal, to enable the terminal to trigger reporting of a Timing Advance (TA) report when the terminal determines that a reporting condition of the TA report is met.

In a seventh aspect, the embodiment of the present disclosure further provides a processor-readable storage medium storing a computer program. When executed by a processor, the computer program implements the steps of the information processing method as described above.

In the embodiment of the present disclosure, the terminal triggers the reporting of the TA report when the reporting condition of the TA report is determined to be met. Through the solutions of the embodiment of the present disclosure, the terminal can trigger the reporting of the TA report at an appropriate time, thereby improving a success rate of information processing.

### BRIEF DESCRIPTION OF THE DRAWINGS

Fig. 1 is a flowchart of an information processing method provided by an embodiment of the present disclosure;
Fig. 2 is another flowchart of an information processing method provided by an embodiment of the present disclosure;
Fig. 3 is a structural diagram of an information processing apparatus provided by an embodiment of the present disclosure;
Fig. 4 is another structural diagram of an information processing apparatus provided by an embodiment of the present disclosure;
Fig. 5 is yet another structural diagram of an information processing apparatus provided by an embodiment of the present disclosure;
Fig. 6 is still yet another structural diagram of an information processing apparatus provided by an embodiment of the present disclosure.

### DETAILED DESCRIPTION

In the embodiments of the present disclosure, the term "and/or" describes the association relationship between associated objects, indicating that there can be three relationships, for example, A and/or B can mean: A exists alone, A and B exist simultaneously, and B exists alone. The symbol "/" generally indicates that the associated objects are in an "or" relationship.

In the embodiments of the present disclosure, the term "plurality" refers to two or more than two, and other quantifiers are similar to it.

The technical solutions in the embodiments of the present disclosure will be clearly and thoroughly described below with reference to the accompanying drawings in the embodiments of the present disclosure. Obviously, the described embodiments are only some of the embodiments of the present disclosure, not all of them. Based on the embodiments in the present disclosure, all other embodiments obtained by those of ordinary skill in the art without making creative efforts fall within the scope of the present disclosure.

The embodiments of the present disclosure provide an information processing method and an information processing apparatus to improve a success rate of information processing.

The method and the apparatus are provided on the basis of a same inventive concept, and a principle of the method for solving the problem is similar to that of the apparatus, so the implementation of the apparatus may refer to that of the method, which will not be further particularly defined herein.

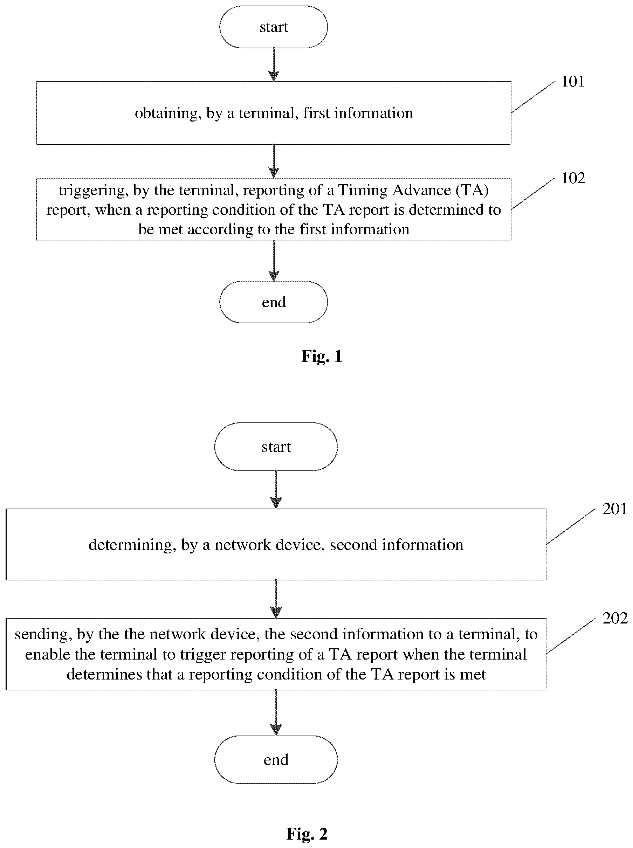

Referring to Fig. 1, which is a flowchart of an information processing method provided by an embodiment of the present disclosure. As shown in Fig. 1, it includes the following steps.

Step 101: obtaining, by a terminal, first information.

In the embodiment of the present disclosure, the first information includes one or more of the followings:
a Reference Signal Received Power (RSRP) referenced by a current downlink path loss;
whether Coverage Enhancement (CE) is applied in a random access process;
a current distance or a current round-trip time or a current TA between the terminal and a reference point;
information of currently available uplink resource;
whether first indication information of a network device is received.

The reference point can be any point within a cell (e.g., a center of the cell), any point at a cell edge, or a satellite, etc.

In a practical application, the terminal can obtain the above first information through measurement, analysis of channel environment, determination based on configuration of the network device received by itself, among others.

Step 102: triggering, by the terminal, reporting of a Timing Advance (TA) report, when a reporting condition of the TA report is determined to be met according to the first information.

The reporting condition includes one or more of the followings:
an RSRP referenced by a current downlink path loss is greater than a first threshold;

Coverage Enhancement (CE) is not applied in a random access process;
the CE is not applied in the random access process, and the RSRP referenced by the current downlink path loss is greater than a second threshold;
a current distance or a current round-trip time or a current TA between the terminal and a reference point is less than or equal to a third threshold;
the CE is not applied in the random access process, and the current distance or the current round-trip time or the current TA between the terminal and the reference point is greater than the third threshold;
currently available uplink resource is not uplink resource allocated for a target random access response message, wherein the target random access response message is a random access response message of the random access process that applies the CE;
receiving first indication information of a network device, wherein the first indication information is used to indicate that the TA report can be reported in the case that the CE is not applied in the random access process.

In a practical application, the terminal can be set with the above-mentioned multiple thresholds, and can also receive the above-mentioned multiple thresholds or indication information from the network device, to determine whether the reporting condition of the TA report is met. At the same time, in the embodiment of the present disclosure, there is no strict size relationship between the various thresholds.

It can be understood that the current distance or the current round-trip time or the current TA between the terminal and the reference point can be set with a same threshold, or different thresholds can be set for the current distance or the current round-trip time or the current TA between the terminal and the reference point.

The current distance or the current round-trip time or the current TA can refer to a parameter obtained when the embodiment of the present disclosure is executed.

When the terminal stores multiple thresholds itself, the terminal can determine whether the reporting condition of the TA report is met in combination with the first information and the corresponding threshold.

For example, the terminal can compare the RSRP referenced by the current downlink path loss with the first threshold. When the RSRP referenced by the current downlink path loss is greater than the first threshold, the terminal can determine to trigger the reporting of the TA report.

For another example, the terminal can first determine whether Coverage Enhancement (CE) is applied in a random access process. When the CE is not applied in the random access process, the terminal can determine to trigger reporting of a Timing Advance (TA) report. In this case, the terminal may also make a determination in combination with a Reference Signal Received Power (RSRP) referenced by a current downlink path loss stored by itself. That is, when the CE is not applied in the random access process, and the RSRP referenced by the current downlink path loss is greater than the second threshold, the terminal can determine to trigger the reporting of the TA report. Alternatively, in this case, further determination may be made in combination with a current distance or a current round-trip time or a current TA between the terminal and a reference point. Specifically, when the CE is not applied in the random access process, and the current distance or the current round-trip time or the current TA between the terminal and the reference point is greater than the third threshold, the terminal can determine to trigger the reporting of the TA report.

For yet another example, the terminal may make a determination in combination with a current distance or a current round-trip time or a current TA between the terminal and the reference point. Specifically, when the current distance or the current round-trip time or the current TA between the terminal and the reference point is less than or equal to a third threshold, the terminal can determine to trigger the reporting of the TA report.

For still yet another example, the terminal may determine whether currently available uplink resource is uplink resource allocated for a target random access response message. The target random access response message is a random access response message of the random access process that applies Coverage Enhancement (CE). When the currently available uplink resource is not the uplink resource allocated for the target random access response message, the terminal can determine to trigger the reporting of a TA report.

For still yet another example, the terminal may determine whether first indication information of the network device is received, wherein the first indication information is used to indicate that the TA report can be reported in the case that the CE is not applied in the random access process. If the first indication information of the network device is received, the terminal can determine to trigger the reporting of a TA report.

When the network device sends the above-mentioned various thresholds to the terminal, the terminal can make a determination in combination with the first information and the threshold received from the network device. Specifically, the terminal receives second information of the network device. The terminal triggers the reporting of the TA report, when the reporting condition is determined to be met according to the first information and/or the second information.

The second information includes one or more of the followings:
a first threshold corresponding to an RSRP referenced by a current downlink path loss;
a second threshold corresponding to the RSRP referenced by the current downlink path loss in the case that Coverage Enhancement (CE) is not applied in a random access process;
a third threshold corresponding to a current distance or a current round-trip time or a current TA between the terminal and a reference point;
first indication information, wherein the first indication information is used to indicate that the TA report can be reported in the case that the CE is not applied in the random access process.

The principle by which the terminal determines whether to trigger the TA report in combination with the first information and the received second information is the same as the principle by which the terminal determines whether to trigger the TA report in combination with the first information and the threshold stored by itself.

In the above process, it needs to determine whether the reporting condition of the TA report is met based on the specific number of pieces of information, which can be set as needed or predetermined. When multiple pieces of information are combined to determine whether the reporting conditions for the TA report are met, as long as one of the conditions for determining the reporting of the TA report is not met, the final determination result is that the reporting conditions for the TA report are not met, and the terminal will not trigger the TA report.

Optionally, in the embodiment of the present disclosure, when Coverage Enhancement (CE) is not applied, the terminal triggers the reporting of the TA report during configuration or reconfiguration of a TA.

In a subsequent process, if the TA needs to be reported, the terminal can report the TA report through a Message 3 (MSG3) of a random access process.

In the embodiment of the present disclosure, the terminal triggers the reporting of the TA report when it is determined that the reporting condition of the TA report is met. Through the scheme of the embodiment of the present disclosure, the terminal can trigger the reporting of the TA report at an appropriate time, thereby improving a success rate of information processing.

On the basis of the above embodiment, the terminal does not trigger the reporting of the TA report, when the reporting condition is determined to be not met according to the first information.

For example, when an RSRP referenced by a current downlink path loss is less than a first threshold, the terminal does not trigger the reporting of the TA report. For another example, when the terminal determines that Coverage Enhancement (CE) is applied in a random access process, the terminal does not trigger the reporting of the TA report. For yet another example, when the CE is applied in the random access process, and the RSRP referenced by the current downlink path loss is greater than the first threshold, the terminal does not trigger the reporting of the TA report. For still yet another example, when a current distance or a current round-trip time or a current TA between the terminal and a reference point is less than the third threshold, the terminal does not trigger the reporting of the TA report. For still yet another example, when the CE is applied in the random access process, and the current distance or the current round-trip time or the current TA between the terminal and the reference point is greater than the third threshold, the terminal does not trigger the reporting of the TA report.

Referring to Fig. 2, which is a flowchart of an information processing method provided by an embodiment of the present disclosure. As shown in Fig. 2, the method includes the following steps.

Step 201: the network device determines a second information.

The second information includes one or more of the followings:
a first threshold corresponding to a Reference Signal Received Power (RSRP) referenced by a current downlink path loss;
a second threshold corresponding to the RSRP referenced by the current downlink path loss in the case that Coverage Enhancement (CE) is not applied in a random access process;
a third threshold corresponding to a current distance or a current round-trip time or a current TA between the terminal and a reference point;
first indication information, wherein the first indication information is used to indicate that the TA report can be reported in the case that the CE is not applied in the random access process.

There is no strict size relationship between the various thresholds, and they can be set as needed.

Step 202: the network device sends the second information to the terminal, to enable the terminal to trigger reporting of a Timing Advance (TA) report when the terminal determines that a reporting condition of the TA report is met.

The second information is carried in system information or dedicated signaling.

In the embodiment of the present disclosure, the terminal triggers the reporting of the TA report when it determines that the reporting condition of the TA report is met. Through the scheme of the embodiment of the present disclosure, the terminal can trigger the reporting of the TA report at an appropriate time, thereby improving a success rate of information processing.

As mentioned above, in the NTN scenario, due to the large transmission delay, the UE will perform TA compensation when sending a preamble, and report the compensated TA in the random access process to ensure the consistent understanding between the UE and the network side. However, in the NTN scenario, there is no restriction on which message in the random access process reports the TA report. When the channel environment is relatively poor at this time, the UE chooses to use the CE. Even if the network side allocates a larger Uplink (UL) grant that can include the TA report, the UE should avoid transmitting the TA report in the MSG3 to prevent an MSG3 reception error. Because for a same UL grant, the UE chooses to transmit a larger MSG3, so that a reception success rate of the MSG3 will be reduced, and a random access success rate of the UE will also be reduced, thereby delaying random access delay of the UE.

To solve the above problem, in the embodiment of the present disclosure, the terminal can trigger the reporting of the TA report, when the terminal determines that the reporting condition of the TA report is met.

The implementation process of the disclosed embodiment is described in detail below in conjunction with specific embodiments.

In an embodiment, for a random access process of applying Coverage Enhancement (CE), the terminal does not trigger the reporting of a TA report. Specifically, the following process may be included.

S1. The UE reads a system message and obtains an indication of reporting the TA report in the system message, which indicates that the UE can report the TA report in an initial random access process.

S2. Due to poor channel environment, the UE initializes the random access process of applying the CE. Since the UE applies the random access process of the CE, the UE cannot trigger the reporting of the TA report.

S3. The UE sends a preamble associated with the CE, and the network device receives the preamble associated with the CE. The network device indicates a number of repetitions of an MSG3 and allocates a corresponding UL grant in a Random Access Response (RAR) or Downlink Control Information (DCI).

S4. After receiving the number of the CEs indicated in the RAR, the UE transmits the MSG3 according to the number of repetitions.

S5. After transmitting the MSG3, the UE receives an MSG4, and the random access process ends.

In an embodiment, for a random access process without applying the CE, the terminal triggers the reporting of a TA report. Specifically, the following process may be included.

S1. The UE reads a system message and obtains an indication of reporting the TA report in the system message, which indicates that the UE can report the TA report in an initial random access process.

S2. Due to a favorable channel environment, the UE initializes the random access process without Coverage Enhancement (CE). Thus, the UE triggers the reporting of the report according to the indication in the system message. That is, since the UE is not applying the CE in the random access process, the UE can trigger the reporting of the TA report.

S3. The UE sends a preamble. The network device receives the preamble and allocates a corresponding UL grant in a Random Access Response (RAR).

S4. When the UE receives the UL grant indicated in the RAR and determines that an allocated reporting grant can include the TA report, the TA report is included in an MSG3.

S5. After transmitting the MSG3, the UE receives an MSG4, and the random access process ends.

In an embodiment, the terminal determines whether to trigger reporting of a TA report according to a value of a Reference Signal Received Power (RSRP). Specifically, the following process may be included.

S1. The UE reads an NTN system message and obtains an indication for reporting the TA report in the system message. The indication indicates that the UE can report the TA report in a random access process, and the UE obtains a first threshold in the system message. The first threshold is used by the UE to determine whether a reporting condition for triggering the TA report is met.

S2. When the UE determines that current channel environment is above the configured first threshold (i.e., the current RSRP is greater than the first threshold), the UE triggers the reporting of the TA report.

S3. According to a condition for applying Coverage Enhancement (CE), the UE initializes the random access process of the CE. The UE sends a preamble associated with the CE. The network device receives the preamble associated with the CE, indicates a number of repetitions of an MSG3 in a Random Access Response (RAR) or Downlink Control Information (DCI), and allocates a corresponding UL grant.

S4. When the UE receives the UL grant indicated in the RAR and determines that an allocated reporting grant can include the TA report, the TA report is included in the MSG3, and the MSG3 is sent according to the number of repetitions.

S5. After transmitting the MSG3, the UE receives an MSG4, and the random access process ends.

In an embodiment, the terminal determines whether to trigger reporting of a TA report according to a value of a Reference Signal Received Power (RSRP) and whether Coverage Enhancement (CE) is applied in a random access process. Specifically, the following process may be included.

S1. The UE reads an NTN system message and obtains an indication for reporting the TA report in the system message, which indicates that the UE can report the TA report in the random access process, and the UE obtains a second threshold in the system message. The second threshold is used by the UE to determine whether a reporting condition for triggering the TA report is met.

S2. When the UE determines that current channel environment is above the configured second threshold (that is, the current RSRP is greater than the second threshold), the reporting of the TA report can be triggered.

S3. According to a condition for applying the CE, the UE initializes the random access process of the CE, thus the UE determines that the reporting of the TA report cannot be triggered.

Since the UE applies the random access process of the CE, in this embodiment, it is determined whether the reporting of the TA report can be triggered according to a current RSRP and whether the CE is applied in the random access process. The determination result obtained in S2 is "the reporting of the TA report can be triggered", and the determination result obtained in S3 is "the reporting of the TA report cannot be triggered". Therefore, the UE determines that the reporting of the TA report cannot be triggered.

S4. The UE sends a preamble associated with the CE. The network device receives the preamble associated with the CE, indicates a number of repetitions of an MSG3 in a Random Access Response (RAR) or Downlink Control Information (DCI), and allocates a corresponding UL grant.

S5. The UE receives the UL grant indicated in the RAR, and sends the MSG3 according to the number of repetitions.

S6. After transmitting the MSG3, the UE receives an MSG4, and the random access process ends.

In an embodiment, a current distance between the terminal and a reference point is used to determine whether to trigger reporting of a TA report. For example, the reference point is a satellite, and the following process may be included.

S1. The UE reads an NTN system message and obtains an indication for reporting the TA report in the system message, which indicates that the UE can report the TA in a random access process and can trigger the reporting of the TA report. At the same time, the UE obtains a third threshold in the system message. The third threshold is used by the UE to determine whether a reporting condition for triggering the TA report is met.

S2. When the UE determines that a current distance to the satellite is less than the third threshold, the reporting of the TA report can be triggered.

S3. The UE initializes the random access process and sends a preamble. The network device receives the preamble and allocates a corresponding UL grant in a Random Access Response (RAR).

S4. The UE receives the UL grant indicated in the RAR, and determines that the UL grant cannot include the TA report, so the UE sends an MSG3 without the TA report.

S5. After transmitting the MSG3, the UE receives an MSG4 and determines that an uplink resource allocated in the MSG4 can include the TA report. The UE generates the TA report and sends it through the uplink scheduling of the MSG4.

In an embodiment, the UE in connected state can determine whether to trigger reporting of a TA report according to a value of a Reference Signal Received Power (RSRP). Specifically, the following process may be included.

S1. The UE reads an NTN system message and obtains an indication for reporting the TA report in the system message, which indicates that the UE cannot report the TA report in a random access process.

S2. The UE initiates the random access process and does not report the TA report in the random access process.

S3. The UE receives a TA change threshold and a first threshold configured by a network device. Since the UE has not reported the TA before and the UE has not stored the TA value, it determines that the TA report can be reported according to the TA change threshold value configured by the network device; when the UE determines that a current measured value of the RSRP is greater than the first threshold, the reporting of the TA report is triggered and the TA report is generated.

S4. When the UE determines that there is a currently available uplink resource, the TA report is transmitted on the available resource.

For the UE in the connected state, the UE may also determine to trigger the reporting of the TA report when the RSRP referenced by a current downlink path loss is greater than the first threshold; or, the UE may also determine to trigger the reporting of the TA report when a current round-trip time or a current TA between the terminal and a reference point is less than or equal to a third threshold; or, the UE may also determine to trigger the reporting of the TA report when a currently available uplink resource is not uplink resource allocated for a target random access response message, wherein the target random access response message is a random access response message of the random access process that applies the CE. Alternatively, the UE may also make determination in combination with one or more of the above conditions.

From the above embodiment, it can be seen that the scheme of the present disclosure can prevent the triggering and generation of a TA report when the TA report is not needed or cannot be triggered or generated, thereby improving a success rate of information reception and a success rate of random access in a random access process.

The technical solutions provided by the embodiments of the present disclosure can be applied to a variety of systems, especially 5G systems. For example, applicable systems may be Global System of Mobile communication (GSM) system, Code Division Multiple Access (CDMA) system, Wideband Code Division Multiple Access (WCDMA), General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave access (WiMAX) system, fifth Generation mobile communication (5th-Generation, 5G) New Radio (NR) system, etc. These various systems each include a terminal device and a network device. The system can also include a core network part, such as the evolved packet system (EPS), and 5G System (5GS), etc.

The terminal device involved in the embodiments of the present disclosure may be a device that provides voice and/or data connectivity to users, a handheld device with a wireless connection function, or other processing devices connected to a wireless modem, etc. In different systems, the names of terminal device may also be different. For example, in a 5G system, the terminal device may be called User Equipment (UE). A wireless terminal device can communicate with one or more Core Networks (CNs) via a Radio Access Network (RAN). The wireless terminal device can be a mobile terminal device, such as a mobile phone (also known as a "cell phone") and a computer with a mobile terminal device, which may be, for example, portable, pocket-sized, handheld, computer-built-in or vehicle-mounted mobile devices, which exchange audio and/or data with a radio access network. For example, Personal Communication Service (PCS) phones, cordless phones, Session Initiated Protocol (SIP) phones, Wireless Local Loop (WLL) stations, Personal Digital Assistants (PDAs) and other devices. A wireless terminal device may also be called a system, a subscriber unit, a subscriber station, a mobile station, a mobile, a remote station, an access point, a remote terminal, access terminal, a user terminal, a user agent, or a user device, which is not limited in the embodiments of the present disclosure.

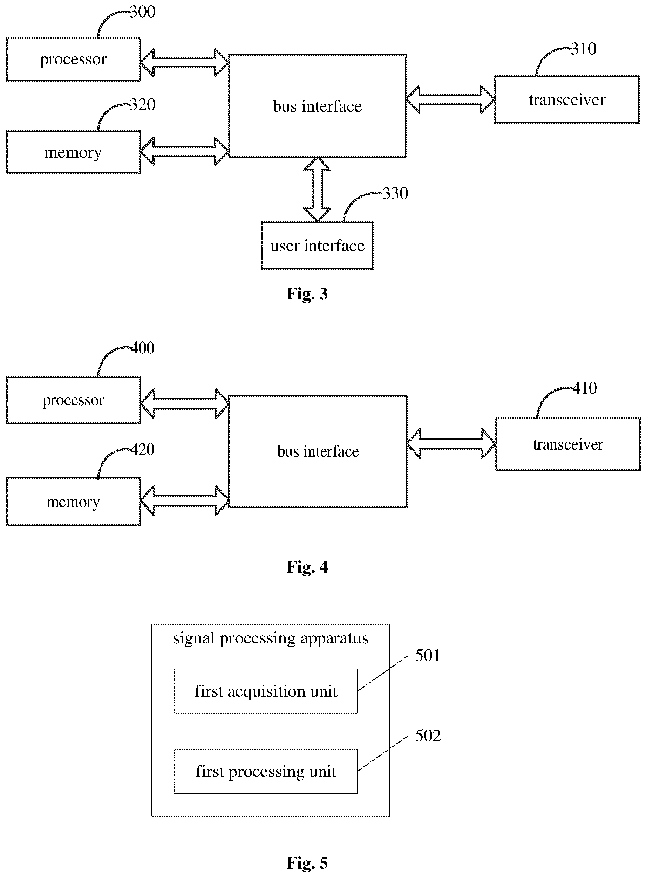

As shown in Fig. 3, the information processing apparatus of the embodiment of the present disclosure is applied to a terminal, and includes: a processor 300, which is configured to read a program in the memory 320 and perform the following processes:
obtaining first information;
triggering reporting of a Timing Advance (TA) report, when a reporting condition of the TA report is determined to be met according to the first information;
a transceiver 310, configured to receive and send data under the control of the processor 300.

In Fig. 3, the bus architecture may include any number of interconnected buses and bridges, and connects various circuits including one or more processors represented by the processor 300 and the memory represented by the memory 320. The bus architecture can also link together various other circuits such as peripherals, voltage regulators, and power management circuits, which are all well known in the art and therefore will not be described further herein. The bus interface provides the interface. The transceiver 310 may be a plurality of elements, including a transmitter and a receiver, to allow for communication with various other apparatuses on the transmission medium. The processor 300 is responsible for managing the bus architecture and general processing, and the memory 320 can store data used by the processor 300 when performing operations.

The processor 300 may be a Central Processing Unit (CPU), an Application Specific Integrated Circuit (ASIC), a Field Programmable Gate Array (FPGA) or Complex Programmable Logic Device (CPLD). The processor can also adopt a multicore architecture.

The processor 300 is responsible for managing the bus architecture and general processing, and the memory 320 can store data used by the processor 300 when performing operations.

The first information includes one or more of the followings:
a Reference Signal Received Power (RSRP) referenced by a current downlink path loss;
whether Coverage Enhancement (CE) is applied in a random access process;
a current distance or a current round-trip time or a current TA between the terminal and a reference point;
information of currently available uplink resource;
whether first indication information of a network device is received.

The processor 300 is further configured to read the program and perform the following steps:
receiving second information of a network device;
triggering the reporting of the TA report, when the reporting condition is determined to be met according to the first information and/or the second information.

The second information includes one or more of the followings:
a first threshold corresponding to an RSRP referenced by a current downlink path loss;
a second threshold corresponding to the RSRP referenced by the current downlink path loss in the case that CE is not applied in a random access process;
a third threshold corresponding to a current distance or a current round-trip time or a current TA between the terminal and a reference point;
first indication information, wherein the first indication information is used to indicate that the TA report can be reported in the case that the CE is not applied in the random access process.

The reporting condition include one or more of the followings:
an RSRP referenced by a current downlink path loss is greater than a first threshold;
CE is not applied in a random access process;
the CE is not applied in the random access process, and the RSRP referenced by the current downlink path loss is greater than a second threshold;
a current distance or a current round-trip time or a current TA between the terminal and a reference point is less than or equal to a third threshold;
the CE is not applied in the random access process, and the current distance or the current round-trip time or the current TA between the terminal and the reference point is greater than the third threshold;
currently available uplink resource is not uplink resource allocated for a target random access response message, wherein the target random access response message is a random access response message of the random access process that applies the CE;
receiving first indication information of a network device, wherein the first indication information is used to indicate that the TA report can be reported in the case that the CE is not applied in the random access process.

The processor 300 is further configured to read the program and perform the following steps:
when CE is not applied, triggering the reporting of the TA report during configuration or reconfiguration of a TA.

The processor 300 is further configured to read the program and perform the following steps:
reporting the TA report through a Message 3 (MSG3) of a random access process.

The processor 300 is further configured to read the program and perform the following steps:
not triggering the reporting of the TA report, when the reporting condition is determined to be not met according to the first information.

It should be noted here that the above-mentioned apparatus provided by the embodiments of the present disclosure can implement all the method steps implemented by the terminal in the above-mentioned method embodiments, and can achieve the same technical effect. The parts and beneficial effects of the embodiments that are the same as the method embodiments will no longer be described in detail.

As shown in Fig. 4, the information processing apparatus of the embodiment of the present disclosure is applied to a network device, and includes: a processor 400, which is configured to read a program in the memory 420 and perform the following processes:
determining second information;
sending the second information to a terminal, to enable the terminal to trigger reporting of a Timing Advance (TA) report when the terminal determines that a reporting condition of the TA report is met;
a transceiver 410, configured to receive and send data under the control of the processor 400.

In Fig. 4, the bus architecture may include any number of interconnected buses and bridges, and connects various circuits including one or more processors represented by the processor 400 and the memory represented by the memory 420. The bus architecture can also link together various other circuits such as peripherals, voltage regulators, and power management circuits, which are all well known in the art and therefore will not be described further herein. The bus interface provides the interface. The transceiver 410 may be a plurality of elements, including a transmitter and a receiver, to allow for communication with various other apparatuses on the transmission medium. For different user equipments, the user interface 430 can also be an interface capable of externally or internally connecting a required device. The connected device includes but is not limited to a keypad, a display, a speaker, a microphone, a joystick, etc.

The processor 400 is responsible for managing the bus architecture and general processing, and the memory 420 can store data used by the processor 400 when performing operations.

The processor 400 may be a Central Processing Unit (CPU), an Application Specific Integrated Circuit (ASIC), a Field Programmable Gate Array (FPGA) or Complex Programmable Logic Device (CPLD). The processor can also adopt a multicore architecture.

By calling the computer program stored in the memory, the processor is configured to perform any of the methods provided by the embodiments of the present disclosure according to the obtained executable instructions. The processor and the memory can also be physically separated.

The second information includes one or more of the followings:
a first threshold corresponding to an RSRP referenced by a current downlink path loss;
a second threshold corresponding to the RSRP referenced by the current downlink path loss in the case that CE is not applied in a random access process;
a third threshold corresponding to a current distance or a current round-trip time or a current TA between the terminal and a reference point;
first indication information, wherein the first indication information is used to indicate that the TA report can be reported in the case that the CE is not applied in the random access process.

It should be noted here that the above-mentioned apparatus provided by the embodiments of the present disclosure can implement all the method steps implemented by the network device in the above-mentioned method embodiments, and can achieve the same technical effect. The parts and beneficial effects of the embodiments that are the same as the method embodiments will no longer be described in detail.

As shown in Fig. 5, the information processing apparatus of the embodiment of the present disclosure is applied to a terminal, and includes: a first acquisition unit 501, configured to acquire first information; a first processing unit 502, configured to trigger reporting of a Timing Advance (TA) report, when a reporting condition of the TA report is determined to be met according to the first information.

The first information includes one or more of the followings:
a Reference Signal Received Power (RSRP) referenced by a current downlink path loss;
whether Coverage Enhancement (CE) is applied in a random access process;
a current distance or a current round-trip time or a current TA between the terminal and a reference point;
information of currently available uplink resource;
whether first indication information of a network device is received.

Optionally, the first processing unit includes:
a first receiving subunit, configured to receive second information of a network device;
a first processing subunit, configured to trigger the reporting of the TA report, when the reporting condition is determined to be met according to the first information and/or the second information.

The second information includes one or more of the followings:
a first threshold corresponding to an RSRP referenced by a current downlink path loss;
a second threshold corresponding to the RSRP referenced by the current downlink path loss in the case that CE is not applied in a random access process;
a third threshold corresponding to a current distance or a current round-trip time or a current TA between the terminal and a reference point;
first indication information, wherein the first indication information is used to indicate that the TA report can be reported in the case that the CE is not applied in the random access process.

The reporting condition include one or more of the followings:
an RSRP referenced by a current downlink path loss is greater than a first threshold;
CE is not applied in a random access process;
the CE is not applied in the random access process, and the RSRP referenced by the current downlink path loss is greater than a second threshold;
a current distance or a current round-trip time or a current TA between the terminal and a reference point is less than or equal to a third threshold;
the CE is not applied in the random access process, and the current distance or the current round-trip time or the current TA between the terminal and the reference point is greater than the third threshold;
currently available uplink resource is not uplink resource allocated for a target random access response message, wherein the target random access response message is a random access response message of the random access process that applies the CE;
receiving first indication information of a network device, wherein the first indication information is used to indicate that the TA report can be reported in the case that the CE is not applied in the random access process.

The reference point includes any one of the followings:
any point within a cell, any point at a cell edge, or a satellite.

The first processing unit is configured to trigger the reporting of the TA report during configuration or reconfiguration of a TA, when CE is not applied.

The apparatus may further include:
a first sending unit, configured to report the TA report through a Message 3 (MSG3) of a random access process.

The apparatus may further include:
a second processing unit, configured to not trigger the reporting of the TA report, when the reporting condition is determined to be not met according to the first information.

It should be noted here that the above-mentioned apparatus provided by the embodiments of the present disclosure can implement all the method steps implemented by the terminal in the above-mentioned method embodiments, and can achieve the same technical effect. The parts and beneficial effects of the embodiments that are the same as the method embodiments will no longer be described in detail.

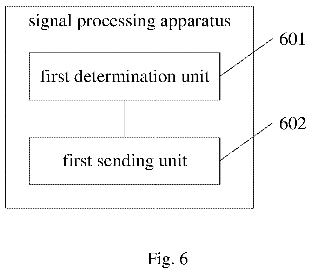

As shown in Fig. 6, the information processing apparatus of the embodiment of the present disclosure is applied to a network device, and includes:
a first determination unit 601, configured to determine second information; a first sending unit 602, configured to send the second information to a terminal, to enable the terminal to trigger reporting of a Timing Advance (TA) report when the terminal determines that a reporting condition of the TA report is met.

Optionally, the second information includes one or more of the followings:
a first threshold corresponding to an RSRP referenced by a current downlink path loss;
a second threshold corresponding to the RSRP referenced by the current downlink path loss in the case that CE is not applied in a random access process;
a third threshold corresponding to a current distance or a current round-trip time or a current TA between the terminal and a reference point;
first indication information, wherein the first indication information is used to indicate that the TA report can be reported in the case that the CE is not applied in the random access process.

The second information is carried in system information or dedicated signaling.

It should be noted here that the above-mentioned apparatus provided by the embodiments of the present disclosure can implement all the method steps implemented by the network device in the above-mentioned method embodiments, and can achieve the same technical effect. The parts and beneficial effects of the embodiments that are the same as the method embodiments will no longer be described in detail.

It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the related art, or the entirety or parts of the technical solution of the present disclosure may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present disclosure. The aforementioned storage media include: U disk, removable hard disk, Read-Only Memory (ROM), Random Access Memory (RAM), magnetic disk or optical disc and other media that can store program code.

The present disclosure further provides a processor-readable storage medium on which a program is stored. When executed by a processor, the program implements various processes of the information processing method embodiments mentioned above and can achieve the same technical effect. To avoid repetition, the details will not be elaborated here. The readable storage medium may be any available media or data storage device that the processor can access, including but not limited to magnetic storage (such as floppy disks, hard disks, magnetic tapes, Magneto-Optical disks (MO)), optical storage (such as Compact Disc (CD), Digital Versatile Disc (DVD), Blu-ray Disc (BD), High-definition Versatile Disc (HVD)), and semiconductor memories (such as Read-Only Memory (ROM), Erasable Programmable ROM (EPROM), Electrically Erasable Programmable ROM (EEPROM), non-volatile memory (NAND FLASH), Solid State Disk or Solid State Drive (SSD)), etc.

It should be noted that in this document, the terms "include" , "comprise" or any other variations intend to provide non-exclusive coverage, so that a process, method, item, or device including a series of elements includes not only those elements, but also other elements not explicitly listed, or also includes elements inherent to such process, method, item or device. In the absence of further limitations, an element defined by the sentence "comprises a ..." does not exclude the existence of other identical elements in the process, method, item or device including the element.

Through the description of the above implementation methods, those skilled in the art can clearly understand that the above-mentioned embodiment methods can be implemented by means of software in conjunction with a necessary general hardware platform. Obviously, it can also be implemented through hardware, but in many cases the former is a better implementation method. Based on such an understanding, essential parts, or parts contributing to the related art, of the technical solution of the present disclosure may be implemented in a form of a software product. The computer software product is stored in a storage medium (such as ROM/RAM, a magnetic disk, or an optical disc), and includes several instructions to enable a terminal (which can be a mobile phone, computer, server, air conditioner, or network device, etc.) to perform the methods described in the various embodiments of the present disclosure.

It should be understood that the division of each module above is only a division of logical functions. In actual implementation, it can be fully or partially integrated into one physical entity, or it can also be physically separated. These modules can all be implemented in the form of software called by processing elements; they can also all be implemented in the form of hardware; or some modules can be implemented in the form of software called by processing elements, and some modules can be implemented in the form of hardware. For example, a certain module can be a separate processing element, or it can be integrated and implemented in a chip of the above-mentioned device. In addition, it can also be stored in the memory of the above-mentioned apparatus in the form of program codes, and called by a processing element of the above-mentioned apparatus to execute the functions of the modules identified above. The implementation of other modules is similar. In addition, all or part of these modules can be integrated together or implemented independently. The processing element described here may be an integrated circuit with signal processing capabilities. During the implementation process, each step of the above method or each of the above modules can be accomplished by integrated logic circuits in the form of hardware or instructions in the form of software in the processor element.

For example, each module, unit, sub-unit or sub-module may be one or more integrated circuits configured to implement the above method, such as: one or more Application Specific Integrated Circuits (ASICs), or, one or more microprocessors (Digital Signal Processor, DSP), or one or more Field Programmable Gate Arrays (FPGAs). For another example, when one of the above modules is implemented in the form of a processing element calling program codes, the processing element can be a general-purpose processor, such as a Central Processing Unit (CPU) or other processors that can call the program codes. For another example, these modules can be integrated together and implemented in the form of a System-On-A-Chip (SOC).

Terms "first", "second" and the like in the specification and claims of the present disclosure are adopted not to describe a specific sequence or order but to distinguish similar objects. It should be understood that data used like this may be interchanged under a proper condition for implementation of the embodiments of the disclosure described here in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic in the process, the method, the product or the equipment. In addition, the use of "and/or" in the specification and claims indicates at least one of the connected objects, for example, A and/or B and/or C indicates the inclusion of 7 situations, namely, A alone, B alone, C alone, both A and B exist, both B and C exist, both A and C exist, and A, B, and C all exist. Similarly, the use of "at least one of A and B" in the specification and claims should be understood to mean "A alone, B alone, or both A and B exist."

The embodiments of the present disclosure are described above in conjunction with the accompanying drawings; however, the present disclosure is not limited to the above-mentioned detailed description. The detailed description is merely illustrative and not restrictive. Under the teaching of the present disclosure, those of ordinary skill in the art can also make various forms without departing from the spirit of the present disclosure and the scope protected by the claims, all of which are within the protection of the present disclosure.

## Claims

1. An information processing method, comprising:
obtaining, by a terminal, first information;
triggering, by the terminal, reporting of a Timing Advance (TA) report, when a reporting condition of the TA report is determined to be met according to the first information.

2. The method according to claim 1, wherein the first information comprises one or more of the followings:
a Reference Signal Received Power (RSRP) referenced by a current downlink path loss;
whether Coverage Enhancement (CE) is applied in a random access process;
a current distance or a current round-trip time or a current TA between the terminal and a reference point;
information of currently available uplink resource;
whether first indication information of a network device is received.

3. The method according to claim 1, wherein the triggering, by the terminal, the reporting of the TA report, when the reporting condition of the TA report is determined to be met according to the first information, comprising:
receiving, by the terminal, second information of a network device;
triggering, by the terminal, the reporting of the TA report, when the reporting condition is determined to be met according to the first information and/or the second information.

4. The method according to claim 3, wherein the second information comprises one or more of the followings:
a first threshold corresponding to an RSRP referenced by a current downlink path loss;
a second threshold corresponding to the RSRP referenced by the current downlink path loss in the case that CE is not applied in a random access process;
a third threshold corresponding to a current distance or a current round-trip time or a current TA between the terminal and a reference point;
first indication information, wherein the first indication information is used to indicate that the TA report can be reported in the case that the CE is not applied in the random access process.

5. The method according to any one of claims 1 to 4, wherein the reporting condition comprises one or more of the followings:
an RSRP referenced by a current downlink path loss is greater than a first threshold;
CE is not applied in a random access process;
the CE is not applied in the random access process, and the RSRP referenced by the current downlink path loss is greater than a second threshold;
a current distance or a current round-trip time or a current TA between the terminal and a reference point is less than or equal to a third threshold;
the CE is not applied in the random access process, and the current distance or the current round-trip time or the current TA between the terminal and the reference point is greater than the third threshold;
currently available uplink resource is not uplink resource allocated for a target random access response message, wherein the target random access response message is a random access response message of the random access process that applies the CE;
receiving first indication information of a network device, wherein the first indication information is used to indicate that the TA report can be reported in the case that the CE is not applied in the random access process.

6. The method according to claim 5, wherein the reference point comprises any one of the followings:
any point within a cell, any point at a cell edge, or a satellite.

7. The method according to claim 1, wherein the triggering, by the terminal, the reporting of the TA report, comprising:
when CE is not applied, triggering, by the terminal, the reporting of the TA report during configuration or reconfiguration of a TA.

8. The information processing method according to claim 1 or 7, further comprising:
reporting, by the terminal, the TA report through a Message 3 (MSG3) of a random access process.

9. The information processing method according to claim 1, further comprising:
not triggering, by the terminal, the reporting of the TA report, when the reporting condition is determined to be not met according to the first information.

10. An information processing method, comprising:
determining, by a network device, second information;
sending, by the network device, the second information to a terminal, to enable the terminal to trigger reporting of a Timing Advance (TA) report when the terminal determines that a reporting condition of the TA report is met.

11. The method according to claim 10, wherein the second information comprises one or more of the followings:
a first threshold corresponding to a Reference Signal Received Power (RSRP) referenced by a current downlink path loss;
a second threshold corresponding to the RSRP referenced by the current downlink path loss in the case that Coverage Enhancement (CE) is not applied in a random access process;
a third threshold corresponding to a current distance or a current round-trip time or a current TA between the terminal and a reference point;
first indication information, wherein the first indication information is used to indicate that the TA report can be reported in the case that the CE is not applied in the random access process.

12. The method according to claim 10 or 11, wherein the second information is carried in system information or dedicated signaling.

13. An information processing apparatus applied to a terminal, comprising: a memory, a transceiver, and a processor:
wherein the memory is configured to store a computer program; the transceiver is configured to receive and send data under the control of the processor; the processor is configured to read the computer program in the memory and perform the following operations:
obtaining first information;
triggering reporting of a Timing Advance (TA) report, when a reporting condition of the TA report is determined to be met according to the first information.

14. The apparatus according to claim 13, wherein the first information comprises one or more of the followings:
a Reference Signal Received Power (RSRP) referenced by a current downlink path loss;
whether Coverage Enhancement (CE) is applied in a random access process;
a current distance or a current round-trip time or a current TA between the terminal and a reference point;
information of currently available uplink resource;
whether first indication information of a network device is received.

15. The apparatus according to claim 13, wherein the processor is further configured to read the computer program in the memory and perform the following operations:
receiving second information of a network device;
triggering the reporting of the TA report, when the reporting condition is determined to be met according to the first information and/or the second information.

16. The apparatus according to claim 15, wherein the second information comprises one or more of the followings:
a first threshold corresponding to an RSRP referenced by a current downlink path loss;
a second threshold corresponding to the RSRP referenced by the current downlink path loss in the case that CE is not applied in a random access process;
a third threshold corresponding to a current distance or a current round-trip time or a current TA between the terminal and a reference point;
first indication information, wherein the first indication information is used to indicate that the TA report can be reported in the case that the CE is not applied in the random access process.

17. The apparatus according to any one of claims 13 to 16, wherein the reporting condition comprise one or more of the followings:
an RSRP referenced by a current downlink path loss is greater than a first threshold;
CE is not applied in a random access process;
the CE is not applied in the random access process, and the RSRP referenced by the current downlink path loss is greater than a second threshold;
a current distance or a current round-trip time or a current TA between the terminal and a reference point is less than or equal to a third threshold;
the CE is not applied in the random access process, and the current distance or the current round-trip time or the current TA between the terminal and the reference point is greater than the third threshold;
currently available uplink resource is not uplink resource allocated for a target random access response message, wherein the target random access response message is a random access response message of the random access process that applies the CE;
receiving first indication information of a network device, wherein the first indication information is used to indicate that the TA report can be reported in the case that the CE is not applied in the random access process.

18. The apparatus according to claim 13, wherein the processor is further configured to read the computer program in the memory and perform the following operations:
when CE is not applied, triggering the reporting of the TA report during configuration or reconfiguration of a TA.

19. The apparatus according to claim 13, wherein the processor is further configured to read the computer program in the memory and perform the following operations:
reporting the TA report through a Message 3 (MSG3) of a random access process.

20. The apparatus according to claim 13, wherein the processor is further configured to read the computer program in the memory and perform the following operations:
not triggering the reporting of the TA report, when the reporting condition is determined to be not met according to the first information.

21. An information processing apparatus applied to a network device, comprising: a memory, a transceiver, and a processor:
wherein the memory is configured to store a computer program; the transceiver is configured to receive and send data under the control of the processor; the processor is configured to read the computer program in the memory and perform the following operations:
determining second information;
sending the second information to a terminal, to enable the terminal to trigger reporting of a Timing Advance (TA) report when the terminal determines that a reporting condition of the TA report is met.

22. The apparatus according to claim 21, wherein the second information comprises one or more of the followings:
a first threshold corresponding to a Reference Signal Received Power (RSRP) referenced by a current downlink path loss;
a second threshold corresponding to the RSRP referenced by the current downlink path loss in the case that Coverage Enhancement (CE) is not applied in a random access process;
a third threshold corresponding to a current distance or a current round-trip time or a current TA between the terminal and a reference point;
first indication information, wherein the first indication information is used to indicate that the TA report can be reported in the case that the CE is not applied in the random access process.

23. An information processing apparatus applied to a terminal, comprising:
a first acquisition unit, configured to acquire first information;
a first processing unit, configured to trigger reporting of a Timing Advance (TA) report, when a reporting condition of the TA report is determined to be met according to the first information.

24. An information processing apparatus applied to a network device, comprising:
a first determination unit, configured to determine second information;
a first sending unit, configured to send the second information to a terminal, to enable the terminal to trigger reporting of a Timing Advance (TA) report when the terminal determines that a reporting condition of the TA report is met.

25. A processor-readable storage medium storing a computer program, wherein the computer program is used to cause a processor to execute the method according to any one of claims 1 to 12.
